(19) **Europäisches Patentamt**

**European Patent Office**

**Office européen des brevets**

(11) Veröffentlichungsnummer: **0 007 296**
**B2**

(12) **NEUE EUROPÄISCHE PATENTSCHRIFT**

(45) Veröffentlichungstag der neuen Patentschrift:
**01.07.87**

(21) Anmeldenummer: **79890017.1**

(22) Anmeldetag: **20.06.79**

(51) Int. Cl.⁴: **F 27 D 3/02, F 16 L 53/00**

㊾ Gleitbalken, insbesondere für einen Stossofen und Erzeugung von Hochdruck-Sattdampf unter Verwendung
des vorgenannten Gleitbalkens.

(30) Priorität: **23.06.78 AT 4579/78**

(43) Veröffentlichungstag der Anmeldung:
**23.01.80 Patentblatt 80/2**

(45) Bekanntmachung des Hinweises auf die Patenterteilung:
**15.04.81 Patentblatt 81/15**

(45) Bekanntmachung des Hinweises auf die Entscheidung
über den Einspruch:
**01.07.87 Patentblatt 87/27**

(84) Benannte Vertragsstaaten:
**DE FR IT**

(56) Entgegenhaltungen:
**AT-B-223 640**
**DE-B-1 583 363**
**DE-C-576 976**
**DE-C-858 418**
**US-A-3 304 070**
**US-A-3 311 357**

(73) Patentinhaber: **VOEST- ALPINE Aktiengesellschaft,
Werksgelände, A-4010 Linz (AT)**

(72) Erfinder: **Der Erfinder hat auf seine Nennung
verzichtet**

(74) Vertreter: **Wolfram, Gustav, Dipl.- Ing.,
Schwindgasse 7 P.O. Box 205, A-1041 Wien (AT)**

LIBER, STOCKHOLM 1987

## Beschreibung

Die Erfindung betrifft einen Gleitbalken, insbesondere für einen Stoßofen, mit einem von einem Kühlmittel durchflossenen Innenraum, dessen Rohrinnenquerschnitt in Richtung seiner horizontalen Mittelachse eine geringere Erstreckung aufweist, als seine Erstreckung in Richtung seiner vertikalen Mittelachse beträgt, sowie die Verwendung des Gleitbalkens zur Gewinnung von Hochdruck-Sattdampf.

Gleitbalken sind insbesondere in Stoßöfen, die sowohl mit einer Ober- als auch Unterfeuerung ausgestattet sind, hohen Biegebeanspruchungen durch die zu fördernden Werkstücke sowie Druckbeanspruchungen durch das sie durchströmende Kühlmittel ausgesetzt, wobei durch die hohen Temperaturen im Inneren der Öfen eine Minderung der Materialfestigkeit der Gleitbalken eintritt. Als Folge dieser spezifischen Beanspruchungen kann es bei Verwendung von Gleitbalken zu Verformungen und Einrissen und damit zum Kühlmittelaustritt kommen.

Aus der AT-B-223 630 ist es für Gleitbalken in Wärmebehandlungsöfen von Hüttenwerken bekannt, zur Erhöhung des Widerstandsmomentes gegen Biegebeanspruchung Rohre mit rechteckigem Querschnitt zu verwenden, die an ihrem gesamten Umfang die gleiche Wandstärke aufweisen. An einer Seite dieser Rohre sind die in Längsrichtung der Rohre sich erstreckenden Verschleißleisten, auf denen das zu fördernde Werkstück, beispielsweise eine Bramme, gleitet, aufgeschweißt. Der tragende Rohrquerschnitt wird durch die Verschleißleiste jedoch nicht verstärkt. Zwischen Verschleißleiste und Rohrquerschnitt kommt es zur Bildung einer Wärmefalle, da die Schweißnähte, die zur Befestigung der verschleißleiste dienen, sich nicht über die gesamte Breite der Verschleißleiste erstrecken. Dadurch kommt es zu einer stark ungleichen Wärmebelastung der Verschleißleiste und des tragenden Rohrquerschnittes, wodurch, Verformungen des Gleitbalkens und Risse in den Schweißnähten entstehen können.

Es ist weiters aus der DE-C-576 976 ein Gleitrohr für Wärmebehandlungsöfen bekannt, welches aus einem Rohr mit kreisförmigem Querschnitt gebildet ist, das über seinen gesamten Umfang eine gleiche Wandstärke aufweist und auf das an der Ober- und Unterseite einen kreisförmigen Quarschnitt aufweisende Verschleißleisten aufgeschweißt sind. Bedingt durch die Kreisform des hohlen Rohres sind zur Befestigung der Verschleißleisten große, überdimensionierte Schweißnahtvolumen notwendig, was festigkeitsmäßig nachteilig ist und einen überaus hohen Fertigungsaufwand bedingt. Diese überdimensionierten Schweißnähte liegen in durch Zug- und Druckkräfte beaufschlagten Zonen des Gleitbalkens, was ebenfalls nachteilig ist.

Ein Gleitbalken der eingangs beschriebenen Art ist aus dar US-A-3,304,070 bekannt. Dieser bekannte Gleitbalken, der die Vorteile eines Hochkantquerschnittes aufweist, ist an seiner dem zu fördernden Werkstück zugewendeten Seite mit einer aufgeschweißten Verschleißleiste versehen. Die die Verschleißleiste mit dem Gleitbalken verbindende Schweißnaht wirkt sich auch bei diesem Gleitbalken, in gleicher Weise wie weiter oben beschrieben, nachteilig auf den Wärmeübergang, Fertigungsaufwand und die Belastbarkeit des Gleitbalkens aus, ebenso die konstante Wandstärke.

Die Erfindung bezweckt die Vermeidung dieser Nachteile und Schwierigkeiten und stellt sich die Aufgabe, einen Gleitbalken zu schaffen, der unter Beachtung der Forderung nach möglichst großer Material- bzw. Eigengewichtseinsparung, außer einem höheren Widerstandsmoment gegen Biegebeanspruchung auch einen einem hohen Druck des Kühlmittels standhaltenden Widerstand aufweist. Insbesondere soll es möglich sein, die Temperatur des erfindungsgemäßen Gleitbalkens höher zu halten als die der bekannten, sodaß der Gleitbalken zum Zweck der Dampferzeugung verwendet werden kann, ohne jedoch bleibende Verformungen zu erleiden.

Diese Aufgabe wird erfindungsgemäß dadurch gelöst, daß der Rohrquerschnitt von einem im wesentlichen ellipsenförmigen Innen- und einem im wesentlichen ellipsenförmigen Außenrand gebildet ist und daß die Wandstärke des tragenden Rohrquerschnittes ausgehend von einem Minimalwert an der horizontalen Mittelachse des Querschnittes bis zu einem maximalen Wert an etwa der vertikalen Mittelachse des Querschnittes aus einstückig mit der Wand des Gleitbalkens geformtem Material zunehmend dicker ausgebildet ist. Ein Gleitbalken mit einer solchen Querschnittsform kann vorteilhaft für eine Hochdruckdampfkühlung verwendet werden.

Der erfindungsgemäße Gleitbalken vereinigt die Vorteile eines Hochkantquerschnittes und die Vorteile möglichst großer Materialanhäufung in möglichst großem vertikalem Abstand von der Mittelachse des Gleitbalkens bei einfacher Fertigung, wobei in Zug- bzw. Druckzonen liegende Schweißnähte vermieden werden.

Vorteilhaft weist die maximale Wandstärke die ein einhalb bis vierfache Dicke der minimalen Wandstärke auf.

Um den Gleitbalken gegen besonders hohen Innendruck extrem widerstandsfähig auszubilden, ist zweckmäßig die Wandstärke vom Minimal- zum Maximalwert stetig zunehmend dicker ausgebildet.

Es ist zweckmäßig, wenn die vom Innenrand des Rohrquerschnittes umschlossene Fläche in Richtung der vertikalen Mittelachse eine eineinhalb- bis dreifache Erstreckung der Erstreckung in Richtung der horizontalen Mittelachse aufweist.

Um einen ausreichende Auflagefläche für die zu fördernden Werkstücke auf dem Gleitbalken sicherzustellen, ist es zweckmäßig, wenn der Außenrand des Rohrquerschnittes im Bereich der vertikalen Mittelachse abgeplattet ausgebildet ist.

Eine weitere bevorzugte Ausführungsform ist dadurch gekennzeichnet, daß der Außenrand der Rohrquerschnittes im Bereich der vertikalen Mittelachse eine stegartige Erhebung aufweist, wodurch an dem Gleitbalken selbst und einstückig mit diesem ausreichend Verschleißmaterial vorgesehen ist, so daß das Aufsetzen bzw. Anschweißen von eigenen Verschleißleisten nicht notwendig ist.

Eine fertigungstechnisch besonders zweckmäßige Ausgestaltung des Gleitbalkens ergibt sich, wenn er aus zwei jeweils einstückig ausgebildeten Halbschalen, die in Längsrichtung im Bereich der horizontalen Mittelebene des Gleitbalkens miteinander verschweißt sind, zusammengesetzt ist. Dabei ist es von Vorteil, wenn die Halbschalen im Strangpreßverfahren hergestellt sind, wodurch besonders lange Gleitbalken herstellbar sind.

Vorteilhaft werden erfindungsgemäße Gleitbalken zur Erzeugung von Hochdruck-Sattdampf mit einer Temperatur von 150 bis zu 300°C und einem Druck von 1 bis 3 Mpa verwendet.

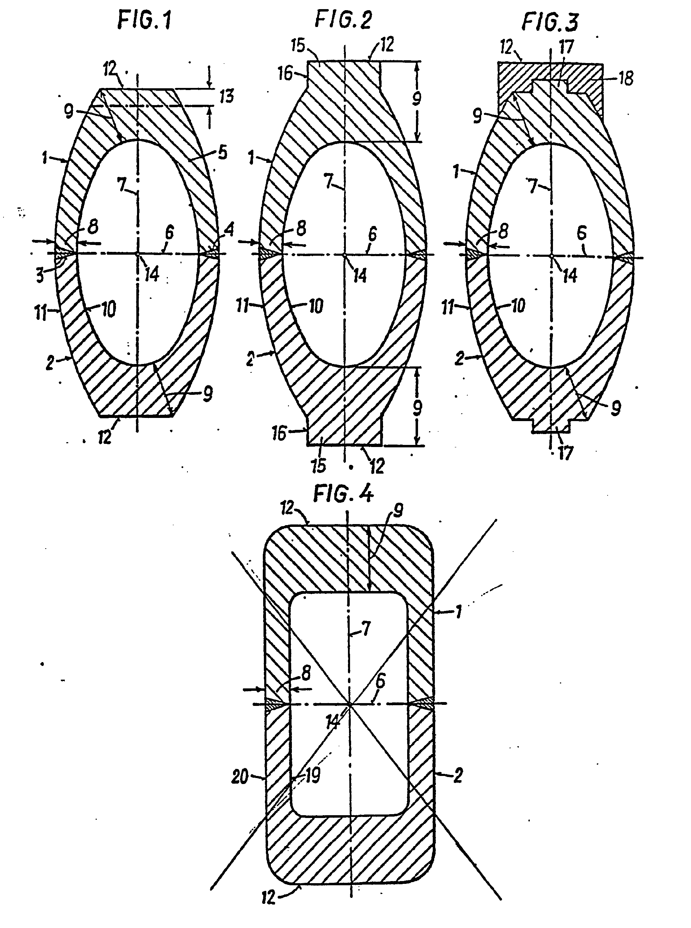

Der erfindungsgemäße Gleitbalken ist anhand mehrerer, in den Fig. 1 bis 3 in Schnittdarstellung gezeigter Ausführungsformen nachfolgend näher erläutert, wobei die Schnitte rechtwinkelig zur Längserstreckung der Gleitbalken gelegt sind. Gemäß den dargestellten Ausführungsformen ist der Gleitbalken jeweils aus zwei stranggepreßten Halbschalen 1, 2 gebildet. Die Schweißkanten 3, 4 sind beim Strangpressen bereits mitgeformt worden. Der nach Verschweißen der beiden Halbschalen gebildete Gleitbalken weist einen Querschnitt 5 auf, dessen Erstreckung in Richtung seiner horizontalen Mittelachse 6 geringer ist als seine Erstreckung in Richtung seiner vertikalen Mittelachse 7 und wobei weiters die Wandstärke des Rohrquerschnittes von einem Minimalwert 8 an der horizontalen Mittelachse 6 bis zu einem Maximalwert 9 nahe der vertikalen Mittelachse zunehmend dicker ausgebildet ist. Der Innen-10 und Außenrand 11 des Querschnittes sind etwa ellipsenförmig, wobei gemäß Fig. 1 der Außenrand 11 im Bereich dér vertikalen Mittelachse 7 zwecks Bildung einer Auflagefläche 12 für die zu fördernden Werkstücke abgeplattet ist. Die Wandstärke im Bereich der Auflagefläche 12 ist so gewählt, daß selbst nach einem Verschleiß um das Maß 13 nach einer gewissen Betriebsdauer das Widerstandsmoment gegen Biegung um die horizontale Mittelachse 6 sowie der Widerstand gegen den hohen Innendruck des im Inneren fließenden Kühlmittels noch ausreichend ist. Nach Abnutzung des Gleitbalkens an der oberen Abplattung um das Maß 13 wird der Gleitbalken um 180° um seine Längsachse 14 gewendet, sodaß die der abgenützten Auflagefläche gegenüberliegende Auflagefläche nunmehr als

Gleitbahn dient. Gegebenenfalls kann die Auflagefläche durch Auftragsschweißung wieder erneuert werden.

Die Herstellung des Gleitbalkens ist trotz der besonderen Profilierung kostengünstig, insbesondere wenn die Halbschalen stranggepreßt werden, wodurch die Gleitbalken über eine Längserstreckung von 4 bis 6 m ohne Quernähte ausgebildet werden können. Die Schweißung der Längsnähte erfolgt in der horizontalen Mittelebene, dort wo die Wandstärke am geringsten ist, wobei vorteilhaft Schweißautomaten eingesetzt werden.

Der Gleitbalken gemäß Fig. 2 weist an seiner Ober- und Unterseite im Bereich der vertikalen Mittelebene vorstehende Rippen 15 auf, die durch stegartige Erhebungen 16 des Außenrandes 11 des Rohrquerschnittes gebildet werden. Durch diese Rippen ist zusätzliches Verschleißmaterial an dem Gleitbalken vorgesehen.

Gemäß der Ausführungsform nach Fig. 3 sind ebenfalls in der vertikalen Mittelebene des Gleitbalkens vorstehende Rippen 17 vorgesehen, die für die Montage von separaten Verschleißleisten 18 aus hochzunderfestem Material dienen sollen.

Bei Verwendung entsprechend großer Strangpreßmaschinen ist es möglich, den erfindungsgemäßen Gleitbalken auch einstückig herzustellen.

Durch die Verwendung der erfindungsgemäßen Gleitbalken ist es möglich, die Wärme in den Industrieöfen in ökonomischer Weise und ohne besonderen zusätzlichen Aufwand zur Erzeugung von in anderen Betrieben weiterververtbaren Hochdruck-Sattdampf zu verwerten, wobei Dampftemperaturen bis zu 300°C und Dampfdrücke bis zu 3 MPa erreicht werden können.

**Patentansprüche**

1. Gleitbalken, insbesondere für einen Stoßofen, mit einem von einem Kühlmittel durchflossenen Innenraum, dessen Rohrinnenquerschnitt in Richtung seiner horizontalen Mittelachse (6) eine geringere Erstreckung aufweist, als seine Erstreckung in Richtung seiner vertikalen Mittelachse (7) beträgt, dadurch gekennzeichnet, daß der Rohrquerschnitt (5) von einem im wesentlichen ellipsenförmigen Innen- (10) und einem im wesentlichen ellipsenförmigen Außenrand (11) gebildet ist und daß die Wandstärke des tragenden Rohrquerschnittes ausgehend von einem Minimalwert (8) an der horizontalen Mittelachse (6) des Querschnittes (5) bis zu einem maximalen Wert (9) an etwa der vertikalen Mittelachse (7) des Querschnittes aus einstückig mit der Wand des Gleitbalkens geformtem Material zunehmend dicker ausgebildet ist.

2. Gleitbalken nach Anspruch 1, dadurch gekennzeichnet, daß die maximale Wandstärke die eineinhalb- bis vierfache Dicke der minimalen Wandstärke aufweist.

3. Gleitbalken nach Anspruch 1 oder 2, dadurch gekennzeichnet, daß die Wandstärke vom Minimal- (8) zum Maximalwert (9) stetig zunehmend dicker ausgebildet ist.

4. Gleitbalken nach den Ansprüchen 1 bis 3 dadurch gekennzeichnet, daß die vom Innenrand (10) des Rohrquerschnittes umschlossene Fläche in Richtung der vertikalen Mittelachse (7) eine eineinhalb- bis dreifache Erstreckung der Erstreckung in Richtung der horizontalen Mittelachse (6) aufweist.

5. Gleitbalken nach den Ansprüchen 1 bis 4, dadurch gekennzeichnet, daß der Außenrand (11) des Rohrquerschnittes (5) im Bereich der vertikalen Mittelachse (7) abgeplattet ausgebildet ist.

6. Gleitbalken nach den Ansprüchen 1 bis 5, dadurch gekennzeichnet, daß der Außenrand (11) des Rohrquerschnittes (5) im Bereich der vertikalen Mittelachse (7) eine stegartige Erhebung (16) aufweist.

7. Gleitbalken nach den Ansprüchen 1 bis 6, dadurch gekennzeichnet, daß er aus zwei jeweils einstückig ausgebildeten Halbschalen (1, 2), die in Längsrichtung im Bereich der horizontalen Mittelebene des Gleitbalkens miteinander verschweißt sind, zusammengesetzt ist.

8. Gleitbalken nach Anspruch 7, dadurch gekennzeichnet, daß die Halbschalen (1, 2) im Strangpreßverfahren hergestellt sind.

9. Verwendung von Gleitbalken nach einem der Ansprüche 1 bis 8 zur Gewinnung von Hochdruck-Sattdampf mit einer Temperatur von 150 bis 300°C und einem Druck von 1 bis 3 MPa.

## Claims

1. Sliding beam, in particular for a pusher furnace, comprising an inner cavity through which a coolant flows and whose tubular inner cross section in the direction of its horizontal middle axis (6) has a slighter extension than it has in the direction of its vertical middle axis (7), characterised in that the tubular cross section (5) is formed by a substantially elliptic inner rim (10) and a substantially elliptic outer rim (11), and that the wall thickness of the supporting tubular cross section is made of a material formed in one piece with the wall of the sliding beam and increasing in thickness, starting from a minimal value (8) at the horizontal middle axis (6) of the cross section (5) up to a maximal value (9) at approximately the vertical middle axis (7) of the cross section.

2. Sliding beam according to claim 1, characterised in that the maximal wall thickness is one and a half to four times the thickness of the minimal wall thickness.

3. Sliding beam according to claim 1 or 2, characterised in that the wall thickness is designed so as to steadily increase from the minimal value (8) to the maximal value (9).

4. Sliding beam according to claims 1 to 3, characterised in that the area enclosed by the inner rim (10) of the tubular cross section, in the direction of the vertical middle axis (7), has an extension that is one and a half to three times the extension in the direction of the horizontal middle axis (6).

5. Sliding beam according to claims 1 to 4, characterised in that the outer rim (11) of the tubular cross section (5) is designed to be oblate in the region of the vertical middle axis (7).

6. Sliding beam according to claims 1 to 5, characterised in that the outer rim (11) of the tubular cross section (5) comprises a web-like elevation (16) in the region of the vertical middle axis (7).

7. Sliding beam according to claims 1 to 6, characterised in that it is assembled of two semi-shells (1, 2) each designed in one piece, which are welded together in the longitudinal direction in the region of the horizontal middle plane of the sliding beam.

8. Sliding beam according to claim 7, characterised in that the semi-shells (1, 2) are produced by the extrusion method.

9. Utilisation of a sliding beam according to one of claims 1 to 8 for obtaining high-pressure saturated steam having a temperature of 150 to 300°C and a pressure of 1 to 3 MPa.

## Revendications

1. Longeron de glissement, notamment pour four poussant, comportant une cavité intérieure dans laquelle circule un agent de refroidissement et dont la section transversale intérieure tubulaire présente, dans le sens de son axe médian horizontal (6), une dimension plus petite que celle qu'elle a dans le sens de son axe médian vertical (7), caractérisé en ce que la section transversale (5) du tube est formée d'un bord intérieur (10) de forme sensiblement elliptique et d'un bord extérieur (11) de forme sensiblement elliptique et que l'épaisseur de paroi de la section transversale tubulaire portante est constituée avec une valeur croissante depuis une valeur minimale (8) sur l'axe médian horizontal (6) de la section transversale (5) jusqu'à une valeur maximale (9) au voisinage de l'axe médian vertical (7) de la section transversale en matériau venu d'une pièce avec la paroi du longeron de glissement.

2. Longeron de glissement selon la revendication 1, caractérisé en ce que l'épaisseur de paroi maximale est comprise entre une fois et demi et quatre fois l'épaisseur minimale de paroi.

3. Longeron de glissement selon la revendication 1 ou 2, caractérisé en ce que l'épaisseur de paroi va en augmentant de façon constante depuis la valeur minimale (8) jusqu'à la valeur maximale (9).

4. Longeron de glissement selon les revendications 1 à 3, caractérisé en ce que la surface entourée par le bord intérieur (10) de la section transversale tubulaire présente dans le sens de l'axe médian vertical (7) une longueur comprise entre une fois et demi et trois fois sa longueur dans le sens de l'axe médian horizontal (6).

5. Longeron de glissement selon les revendications 1 à 4, caractérisé en ce que le bord extérieur (11) de la section transversale tubulaire (5) est aplati de façon à former un méplat dans la zone de l'axe médian vertical (7).

6. Longeron de glissement selon les revendications 1 à 5, caractérisé en ce que le bord extérieur (11) de la section transversale tubulaire (5) comporte dans la zone de l'axe médian vertical (7) une partie en relief formant nervure (16).

7. Longeron de glissement selon les revendications 1 à 6, caractérisé en ce que le longeron est constitué de deux demi-coques (1, 2) qui sont chacune en une seul pièce et qui sont soudées l'une à l'autre dans le sens longitudinal dans la zone du plan médian horizontal du longeron de glissement.

8. Longeron de glissement selon la revendication 7, caractérisé en ce que les demi-coques (1, 2) sont fabriquées par le procédé de filage à la presse.

9. Utilisation de longerons de glissement selon les revendications 1 à 8 pour obtenir de la vapeur saturée haute pression dont la température est comprise entre 150 et 300°C et dont la pression est comprise entre 1 et 3 MPa.

FIG.1    FIG.2    FIG.3

FIG.4